# EUROPÄISCHE PATENTANMELDUNG

(11) **EP 1 593 646 A2**
(43) Veröffentlichungstag der Anmeldung: **09.11.2005**
(21) Anmeldenummer: 05008202.3
(22) Anmeldetag: 14.04.2005
(51) Int. Cl.: B66F 17/00

(54) **Reachstacker mit Antikollisionwarnsystem**

(30) Priorität: 04.05.2004 DE 202004007063 U
(71) Anmelder: Liebherr-Werk Nenzing GmbH, 6710 Nenzing (AT)
(72) Erfinder: Klimmer, Thomas, 6580 St. Jakob (AT)
(74) Vertreter: Laufhütte, Dieter

(57) **Zusammenfassung**

Die Erfindung betrifft einen Reachstacker, bestehend aus einem Fahrzeugrahmen, einem auf diesem verschwenkbar angeordneten Teleskopausleger mit einem Lastaufnahmemittel und einer mit dem Fahrzeugrahmen fest oder beweglich verbundenen Fahrerkabine mit dieser zugeordneten Seiten- und/oder Rückspiegeln. Erfindungsgemäß besteht ein Antikollisionswarnsystem, das am Heck angeordnet ist, aus mehreren Sensoren, vorzugsweise Ultraschallsensoren, über die bei Erfassung eines Hindernisses eine akustische und/oder optische Warneinrichtung aktivierbar ist.

## Beschreibung

Die Erfindung betrifft einen Reachstacker nach dem Oberbegriff des Anspruchs 1.

Reachstacker sind gummibereifte Fahrzeuge mit Dieselmotor und Fahrerkabine. Sie sind in der Lage Lasten, insbesondere Container, Trailer, Blech-Coils, Stückgut usw., zu transportieren und zu stapeln. Bisher bekannte Reachstacker sind mit einem am Teleskoparm als Lastaufnahmemittel angeordneten Containerspreader ausgestattet, d. h. ein Heben und Senken des Spreaders erfolgt nur über den Teleskoparm. Sie können voll beladene Container mehrfach hintereinander und übereinander handhaben bzw. stapeln. Bei dem bekannten Reachstacker sind die Fahrerkabinen mit dem Fahrzeug im hinteren Teil fest oder beweglich mit dem Rahmen verbunden angeordnet, wodurch der Fahrer eine gute Sicht auf den mit dem Teleskoparm fest verbundenen Containerspreader hat. Beim Rückwärtsfahren kann sich der Fahrer durch entsprechende Rückspiegel und Seitenspiegel orientieren, ob im Rückraumbereich des Reachstackers Hindernisse stehen.

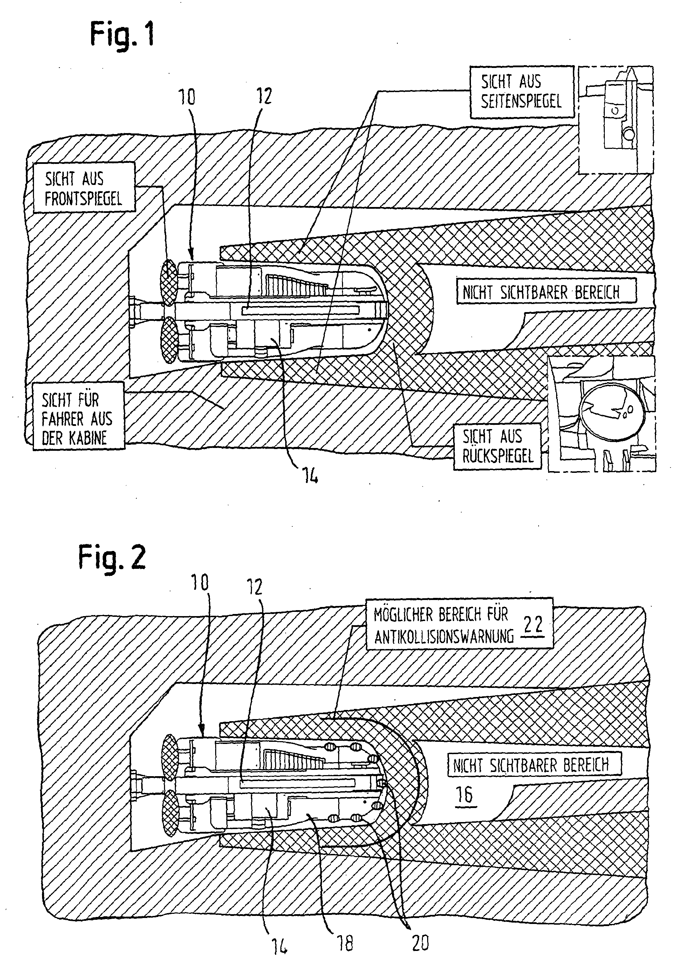

In der Fig. 1 ist ein Reachstacker 10 gezeigt. Mittig ist der verschwenkbar angeordnete Teleskopausleger mit Lastaufnahmemittel 12 angeordnet. Seitlich versetzt zu diesem ist die Fahrerkabine 14 positioniert. Dieser sind Rückspiegel, Seitenspiegel und Frontspiegel zugeordnet. Der sich für den in der Fahrerkabine 14 sitzenden Fahrer ergebende einsehbare Bereich ist schraffiert dargestellt. Mit einfacher Schraffur ist der Bereich dargestellt, der für den Fahrer aus der Kabine frei einsehbar ist. Der doppelt schraffierte Bereich zeigt den Bereich, der jeweils durch die Spiegel einsehbar ist. Wie aus Fig. 1 zu erkennen, gibt es hier einen aufgrund der Aufbauten, beispielsweise des Teleskopauslegers nicht einsehbaren Bereich. Beim Rückwärtsfahren während des Betriebs des Reachstackers besteht hier die Gefahr, dass ein Hindernis übersehen wird und dass es zu einer Kollision mit diesem Hindernis kommt.

Die Aufgabe der vorliegenden Erfindung besteht darin, einen gattungsgemäßen Reachstacker dahin weiterzubilden, dass er auch während des Rückwärtsfahrens sicher betreibbar ist.

Erfindungsgemäß wird diese Aufgabe durch die Kombination der Merkmale des Anspruchs 1 gelöst. Demnach wird hier ein Reachstacker mit dem Merkmal des Oberbegriffs des Anspruchs 1 im Heckbereich mit einem Antikollisionswarnsystem bestehend aus mehreren Sensoren, vorzugsweise Ultraschallsensoren, ausgerüstet, über die bei Erfassung eines Hindernisses eine akustische und optische Warneinrichtung aktivierbar ist. Sobald einer der Sensoren ein Hindernis erkennt, meldet die entsprechende Steuerung dem Fahrer des Reachstackers eine optische und/oder akustische Warnung, so dass dieser reagieren kann und den Reachstakker stoppen kann, um einer Kollision mit dem entdeckten Hindernis vorzubeugen.

Besonders vorteilhafte Ausgestaltungen der Erfindung ergeben sich aus dem sich an den Hauptanspruch anschließenden Unteransprüchen.

Vorteilhaft sind die Ultraschallsensoren in der Karosserie im Heckbereich angeordnet. Dabei können Sie an der Heckunterseite des Reachstackers angeordnet sein, wobei allerdings verhindert werden muss, dass sie die Fahrbahn oder Unebenheiten der Fahrbahn als Hindernis erkennen.

Gemäß einer weiteren vorteilhaften Ausgestaltung der Erfindung sind mindestens drei Ultraschallsensoren im Heckbereich angeordnet. Davon ist vorteilhaft mindestens ein Ultraschallsensor im Heckbereich nach hinten gerichtet, während jeweils mindestens ein Sensor zur Seite gerichtet ist. Hierdurch kann ein weiter Rückraumbereich erfasst werden. Ganz besonders vorteilhaft sind drei Ultraschallsensoren im Heckbereich nach hinten gerichtet während jeweils zwei Sensoren zur Seite gerichtet sind. Die Ultraschallsensoren sind ungefähr gleich weit voneinander in der Karosserie angeordnet und stellen eine lückenlose Überwachung des Rückraumbereichs sicher.

Gemäß einer anderen vorteilhaften Ausgestaltung der Erfindung ist das Antikollisionswarnsystem mittels dieser Ultraschallsensoren mit anderen Systemen, vorteilhaft einem Radarsystem, kombinierbar.

Schließlich ist das Antikollisionswarnsystem wie es in der vorliegenden Erfindung vorgestellt wird, als Nachrüstbausatz ausgebildet.

Weitere Merkmale, Einzelheiten und Vorteile der Erfindung ergeben sich aus einem in der Zeichnung dargestellten Ausführungsbeispiel.

Es zeigen:
Fig. 1: einen Reachstacker mit einer Rückraumüberwachung nach dem Stand der Technik, die lediglich durch Spiegel erreicht wird und
Fig. 2: einen erfindungsgemäßen Reachstacker mit einem erfindungsgemäßen Antikollisionswarnsystem.

In Fig. 2 ist ein Reachstacker 10 gezeigt, der zentral einen verschwenkbar angeordneten Teleskopausleger 12 aufweist, neben dem seitlich mit dem Fahrzeugrahmen fest oder beweglich eine Fahrerkabine 14 verbunden ist. Schraffiert sind in gleicher Weise wie in der einleitend diskutierten Fig. 1 die mit hier nicht näher dargestellten Rück- und Seitenspiegeln einsehbaren Bereichen. Ebenfalls dargestellt ist der hier umrandete und nicht schraffierte für den Fahrer, der in der Fahrerkabine 14 sitzt, nicht sichtbare Bereich 16.

Erfindungsgemäß ist im Heckbereich der Karosserie 18 das Antikollisionswarnsystem gemäß der vorliegenden Erfindung integriert. Hierzu ist eine Reihe von Ultraschallsensoren 20 an der Heckunterseite in einer gemäß der Fig. 2 dargestellten Anordnung angebracht. Drei Sensoren 20 sind im unmittelbaren Heckbereich nach hinten ausgerichtet. Jeweils zwei Sensoren sind im Heckbereich zur Seite hin ausgerichtet.

Die Ultraschallsensoren 20 haben eine Reichweite bis zu 7 Metern in welcher sie Gegenstände erkennen. Diese Sensoren arbeiten so, dass sie Ultraschallimpulse aussenden. Befindet sich nun ein Gegenstand innerhalb der Reichweite der Sensoren, so reflektiert dieser die Ultraschallstrahlen. Die Reflektionen werden von den Sensoren 20 gemessen und als Signal ausgewertet.

Die Sensoren decken einen definierten Kollisionsbereich an der Hinterseite des Gerätes ab, der hier durch eine durchgezogene Linie als möglicher Bereich für Antikollisionswarnung 22 in der Fig. 2 eingezeichnet ist.

Sobald ein Hindernis von den Sensoren 20 erkannt wird, meldet die Steuerung dem Fahrer des Gerätes eine optische und/oder akustische Warnung. Dieser kann dann reagieren und den Reachstacker 10 stoppen.

Je mehr Sensoren für die Erfassung des Bereichs eingesetzt werden, desto größer kann dieser Bereich werden, indem Hindernisse erkannt werden. Vorteilhaft sind sieben Sensoren, wie in Fig. 2 dargestellt gezeigt.

## Patentansprüche

1. Reachstacker, bestehend aus einem Fahrzeugrahmen, einem auf diesem verschwenkbar angeordneten Teleskopausleger mit einem Lastaufnahmemittel und einer mit dem Fahrzeugrahmen fest oder beweglich verbundenen Fahrerkabine mit dieser zugeordneten Seiten und /oder Rückspiegeln,
**dadurch gekennzeichnet,**
**dass** am Heck ein Antikollisionswarnsystem bestehend aus mehreren Sensoren, vorzugsweise Ultraschallsensoren, angeordnet ist, über die bei Erfassung eines Hindernisses eine akustische und/oder optische Warneinrichtung aktivierbar ist.

2. Reachstacker nach Anspruch 1, **dadurch gekennzeichnet, dass** die Sensoren, vorzugsweise Ultraschallsensoren, in der Karosserie im Heckbereich angeordnet sind.

3. Reachstacker nach Anspruch 1 oder 2, **dadurch gekennzeichnet, dass** mindestens drei Ultraschallsensoren im Heckbereich angeordnet sind.

4. Reachstacker nach Anspruch 3, **dadurch gekennzeichnet, dass** mindestens ein Ultraschallsensor im Heckbereich nach hinten gerichtet ist und dass jeweils mindestens ein Sensor zur Seite gerichtet ist.

5. Reachstacker nach Anspruch 4, **dadurch gekennzeichnet, dass** drei Ultraschallsensoren im Heckbereich nach hinten gerichtet sind und dass jeweils zwei Sensoren zur Seite gerichtet sind.

6. Reachstacker nach einem der Ansprüche 1 bis 5, **dadurch gekennzeichnet, dass** das aus mehreren Ultraschallsensoren bestehende Antikollisionswarnsystem mit einem anderen System, beispielsweise Radarsystem, kombiniert ist.

7. Reachstacker nach einem der Ansprüche 1 bis 6, **dadurch gekennzeichnet, dass** das aus mehreren Sensoren, vorzugsweise Ultraschallsensoren, bestehende Antikollisionswarnsystem als Nachrüstbausatz ausgebildet ist.
